# EUROPEAN PATENT APPLICATION

(11) **EP 2 581 195 A1**
(43) Date of publication of application: **17.04.2013**
(21) Application number: 11792510.7
(22) Date of filing: 09.06.2011
(51) Int. Cl.: B29C 45/26, B29C 33/02, B29C 45/02

(54) **METHOD FOR MANUFACTURING RUBBER MOLDED PRODUCT AND TRANSFER MOLDING DIE**

(30) Priority: 11.06.2010 JP 2010134279
(71) Applicant: Toyo Tire & Rubber Co., Ltd., Osaka-shi, Osaka 550-8661 (JP)
(72) Inventor: FUJIMOTO,Kenji, Nishi-ku, Osaka-shi, Osaka (JP); MATSUURA,Hiroyoshi, Nishi-ku, Osaka-shi, Osaka (JP); TSUJIMOTO,Masami, Nishi-ku, Osaka-shi, Osaka (JP)
(74) Representative: Kloiber, Thomas
(86) International application number: PCT/JP2011/063208
(87) International publication number: WO 2011/155553

(57) **Abstract**

The present invention has an object to provide a method for manufacturing a rubber molded product that can fill unvulcanized rubber into a die while preventing bubbles or incomplete filling, and can maintain satisfactory rubber properties after vulcanization molding. Specifically, the method for manufacturing a rubber molded product (7) in which unvulcanized rubber filled into a die (1) is demolded after being heated and vulcanized, includes the steps of: dividing a space in the die (1) into a plurality of regions; filling the unvulcanized rubber into one of the plurality of regions partitioned from the other regions by a partition member (25); repeating the process until a last region among the plurality of regions is left; then removing the partition member (25) from the die (1) and then filling the unvulcanized rubber into the last region, thereby filling the unvulcanized rubber into all the regions.

## Description

### Technical Field

The present invention relates to a method for manufacturing a bulk rubber molded product, and more particularly to a method for manufacturing a rubber molded product that can be favorably applied to a large rubber molded product such as a stopper for an air spring of a vehicle or the like.

### Background Art

Conventionally, a known air spring used in a railway vehicle or the like includes an upper surface plate mounted to a vehicle body, a lower surface plate placed on a wheel side below the upper surface plate, a rubber diaphragm placed across the upper surface plate and the lower surface plate, and an elastic mechanism (stopper) interposed between the lower surface plate and a support frame on the wheel side as disclosed in Patent Literature 1. The stopper regulates vertical fluctuation of the vehicle body, and generally has a multilayer rubber structure including a rubber layer and a steel plate alternately laminated.

If air pressure in the diaphragm of the air spring is insufficient for some reason, the upper surface plate sits on the lower surface plate. In such a case, the stopper having the multilayer rubber structure has particularly low cushioning properties in a vertical direction, thereby significantly reducing riding comfort.

To address such a problem, an air spring using a bulk integral rubber molded product as a stopper is known as disclosed in Patent Literature 2. The stopper in Patent Literature 2 has a shape of an inverted thick bowl-like rubber molded product. Specifically, the stopper has a hemispherical shape with a space formed therein, and is more easily elastically deformed in a vertical direction than the stopper having the multilayer rubber structure. Thus, if air pressure in a diaphragm is insufficient, riding comfort can be maintained to some extent as compared to the stopper having the multilayer rubber structure.

Since a heavy load is applied to the stopper described above, it is important that the entire rubber molded product is firmly integrated. However, when a large rubber molded product such as the stopper is molded with a die, and a large amount of unvulcanized rubber is to be filled into the die at one time, a gas may remain as bubbles in the unvulcanized rubber or incomplete filling of rubber may occur. Such bubbles or incomplete filling of rubber may reduce rubber properties after vulcanization.

Also, when a large amount of unvulcanized rubber is filled into a die at one time, it takes a long time to fill the unvulcanized rubber from start to end. In particular, an injection molding method often used as a method for molding rubber needs to heat the unvulcanized rubber to a high temperature for injection in order to ensure fluidity. Thus, the unvulcanized rubber injected into the die immediately after the start of filling is overheated before the end of filling, thereby causing, so-called, burns that reduce rubber properties after vulcanization.

Patent Literatures 3 and 4 are known as solutions to inconvenience in forming a large rubber molded product. Specifically, Patent Literature 3 describes a method of inserting an extrusion nozzle into a die and filling unvulcanized rubber while moving the nozzle. Patent Literature 4 describes a method of wrapping an unvulcanized rubber sheet around a rotating shaft as a method often used in forming a large cylindrical body such as a rubber roll or a fender.

### Citation List

### Patent Literature

Patent Literature 1: Japanese Patent Laid-Open No. 2007-127168
Patent Literature 2: Japanese Patent Laid-Open No. 60-226308
Patent Literature 3: Japanese Patent Laid-Open No. 2002-210753
Patent Literature 4: Japanese Patent Laid-Open No. 2000-303431

### Summary of Invention

### Technical Problem

However, in the methods described in Patent Literatures 3, for a rubber molded product having a spherical shape, pressure is not evenly applied to each section, and incomplete filling due to rubber flowing occurs. Also, a diameter of the extrusion nozzle needs to be increased in order to smoothly inject unvulcanized rubber into the die, which limits movement of the extrusion nozzle.

The method described in Patent Literature 4 is the method of wrapping the unvulcanized rubber sheet around the rotating shaft, and is thus unsuitable for forming a solid rubber molded product or a spherical rubber molded product and provides a weak joining force between rubber sheets.

Thus, in view of the above problems, the present invention has an object to provide a method for manufacturing a rubber molded product that can fill unvulcanized rubber into a die while preventing bubbles or incomplete filling, and can maintain satisfactory rubber properties after vulcanization molding.

### Solution to Problem

To achieve the object, the present invention provides a method for manufacturing a rubber molded product in which unvulcanized rubber filled into a die is demolded after being heated and vulcanized, including the steps of: dividing a space in the die into a plurality of regions; filling the unvulcanized rubber into one of the plurality of regions partitioned from the other regions by a partition member; repeating the process until a last region among the plurality of regions is left; then removing the partition member from the die and then filling the unvulcanized rubber into the last region, thereby filling the unvulcanized rubber into all the regions.

with the configuration described above, the space in the die is divided into the plurality of regions, and the regions are partitioned one by one by the partition member to fill the unvulcanized rubber into each region. Thus, the unvulcanized rubber can be filled into the die under pressure, thereby preventing bubbles or incomplete filling. This can maintain satisfactory rubber properties after vulcanization. The method for manufacturing a rubber molded product according to the present invention is effective for manufacturing a rubber molded product having a volume of 10 liters or more, and particularly effective for manufacturing a rubber molded product having a volume of 15 liters or more.

In the present invention, the partition member partitions the space in the die into a region to be filled with the unvulcanized rubber and a region to be not filled with the unvulcanized rubber, and may be formed of a rigid material into a plate shape. Specifically, the partition member may be made of a metal material or synthetic resin having such rigidity and thickness as not to be deformed by pressure of the unvulcanized rubber injected into the die.

A specific aspect of the partition member may include a partition member including one continuous member that has a plate shape and can be bent, or a partition member including a plurality of partition plates. To partition the regions using such a partition member, the partition member and an inner wall of the die can surround regions one by one.

Besides, it is also allowed that after the partition member and the inner wall of the die surround one region and the unvulcanized rubber is filled into the region, the partition member is moved, the unvulcanized rubber is filled into a region created between the partition member and the unvulcanized rubber filled into the one region, and the process is repeated until a last region among the plurality of regions is left. This method is particularly effective when the die has an inner wall shape rotationally symmetric around a rotating shaft.

Specifically, it is allowed that when the die has the inner wall shape rotationally symmetric around the rotating shaft, the partition member includes two partition plates that partition the space in the die in a radial direction from the rotating shaft, the two partition plates are placed radially around the rotating shaft in the die, the unvulcanized rubber is filled into the region partitioned by the partition plates, then one of the partition plates and the filled unvulcanized rubber are relatively rotationally displaced around the rotating shaft, the unvulcanized rubber is filled into a region created between one of the partition plates and the filled unvulcanized rubber, and the process is repeated until a last region among the plurality of regions is left.

Thus, there is no need to once remove the partition member from the die and reset the partition member, and a new region can be formed only by relatively rotationally displacing the partition plate. In this case, it is necessary to remove the bonded unvulcanized rubber from one of the partition plates, and keep the other partition plate bonded to the unvulcanized rubber. For this purpose, it is preferable that only a surface of one partition plate is subjected to mold release treatment such as coating with a mold release agent typified by fluororesin or silicone resin, and the other partition plate is not subjected to the mold release treatment.

It is also allowed that a partition member is used in which a plurality of partition plates are radially provided, and an edge of each partition plate comes into contact with an inner wall of the die, the partition member partitions the space in the die into a plurality of regions, the unvulcanized rubber is filled into each region, and the process is repeated until a last region among the plurality of regions is left.

Thus, once the partition member is placed in the die, the partition member may be housed in the die as it is until finally removed from the die, and merely changing a position of an inlet allows the unvulcanized rubber to be filled into each region.

One inlet may be formed in the die. If a plurality of inlets are formed in the die, the unvulcanized rubber can be simultaneously filled into the plurality of regions through the plurality of inlets. In particular, when the partition member in which the plurality of partition plates are radially provided, and the edge of each partition plate comes into contact with the inner wall of the die as described above is used, a time for filling the unvulcanized rubber can be easily reduced.
In this case, filling the unvulcanized rubber into each region means filling the unvulcanized rubber into the regions one by one through one inlet. When there are a plurality of inlets, this means injecting the unvulcanized rubber into the plurality of regions through the plurality of inlets.

In the present invention, the space in the die is divided into the plurality of regions, and the unvulcanized rubber is introduced into the die for each region. The unvulcanized rubber can be introduced into the die by extruding the unvulcanized rubber using an extruder, or can be filled into the die by transfer molding. Specifically, since a transfer pot in a transfer molding machine limits an amount of prepared unvulcanized rubber, a volume of moldable rubber molded products is conventionally limited. However, in this invention, the unvulcanized rubber is introduced into the die in several batches, thereby allowing transfer molding.

In the transfer molding, the unvulcanized rubber can be introduced into the die under higher pressure than in injection molding. Thus, the unvulcanized rubber can be supplied into the die at lower temperature than in the injection molding. Thus, even if it takes time to fill the unvulcanized rubber, there is no risk of occurrence of burns that reduce rubber properties after vulcanization.

Even for a large rubber molded product obtained by the manufacturing method according to the present invention, the unvulcanized rubber can be filled into the die while preventing bubbles or incomplete filling of rubber, and satisfactory rubber properties after vulcanization molding can be maintained. Thus, a bulk integral rubber molded product can be favorably manufactured.

The present invention also provides a transfer molding die having an inner wall shape rotationally symmetric around a rotating shaft, including a partition member that partitions a space in the die, wherein the partition member includes a plurality of partition plates that partition the space in the die in a radial direction from the rotating shaft, the plurality of partition plates are radially placed around the rotating shaft in the die to partition the space in the die.

### Advantageous Effect of Invention

In the present invention, the space in the die for molding the rubber molded product is divided into the plurality of regions, the unvulcanized rubber is filled into one of the plurality of regions partitioned from the other regions by the partition member, the process is repeated until a last region among the plurality of regions is left, then the partition member is removed from the die, and then the unvulcanized rubber is filled into the last region. Thus, even in the case of manufacturing a large rubber molded product, the unvulcanized rubber can be filled into the die while preventing bubbles or incomplete filling, and a rubber molded product that can maintain satisfactory rubber properties after vulcanization molding can be manufactured.

### Brief Description of Drawings

[Figure 1] Figure 1 is a plan view of a transfer molding die of the present invention.
[Figure 2] Figure 2 is an A-A sectional view of Figure 1, showing the die being held between heating platens of a molding machine.
[Figure 3] Figure 3 is an exploded sectional view of the die in Figure 1.
[Figure 4] Figure 4 is an exploded sectional view of a rubber filling upper die.
[Figure 5] Figure 5 is a bottom view of a first upper die to which a partition member is mounted.
[Figure 6] Figure 6 is a B-B sectional view of Figure 5.
[Figure 7] Figure 7 is a C-C sectional view of Figure 5.
[Figure 8] Figure 8 shows a rotation apparatus that rotates the die.
[Figure 9] Figure 9 is a bottom view of the die rotated by 45°, with a lower die and a middle die being removed.
[Figure 10] Figure 10 is a bottom view of the die rotated by 270°, with the lower die and the middle die being removed.
[Figure 11] Figure 11 is a sectional view of the rubber filling upper die coupled by a coupling member.
[Figure 12] Figure 12 is a sectional view showing an annular mounting plate being set in the die having been filled with unvulcanized rubber.
[Figure 13] Figure 13 is a sectional view showing the die being closed using a vulcanizing upper die.
[Figure 14] Figure 14 is a sectional view showing a configuration of an air spring.
[Figure 15] Figure 15 is a bottom view showing another aspect of a partition member.

### Description of Embodiment

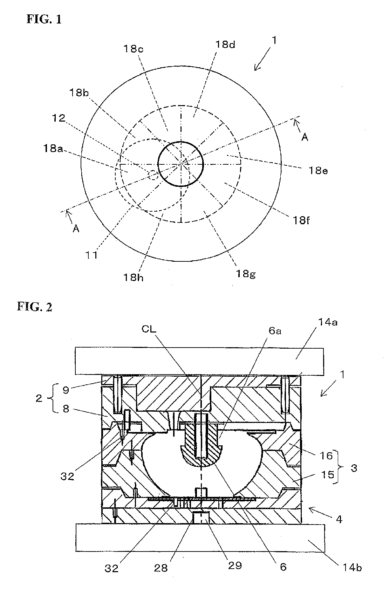

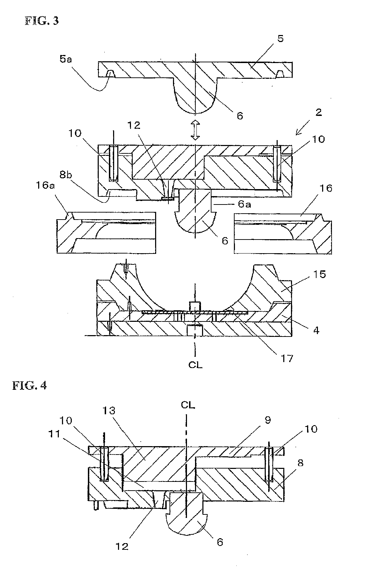

Now, an embodiment of the present invention will be described with reference to the drawings. In this embodiment, a case of manufacturing a stopper for an air spring as a rubber molded product using a transfer molding machine will be described. Figure 1 is a plan view of a transfer molding die (hereinafter referred to as a die) according to the present invention, Figure 2 is an A-A sectional view of Figure 1, showing the die being held between heating platens of the transfer molding machine, and Figure 3 is an exploded sectional view of the die.

As shown in Figures 1 to 3, a die 1 has a substantially cylindrical appearance, and has an inner wall shape rotationally symmetric around a centerline CL of the die as a rotating shaft. The die 1 can be vertically divided into a rubber filling upper die 2, a middle die 3, and a lower die 4. The die 1 is placed between heating platens 14a and 14b of the transfer molding machine. In the die 1, the rubber filling upper die 2 can be replaced by a vulcanizing upper die 5.

The rubber filling die 2 is used for filling unvulcanized rubber, and after filling of the unvulcanized rubber into the die 1, the rubber filling die 2 is replaced by the vulcanizing upper die 5 to perform vulcanization molding. A boss 6 is formed at a center of a lower surface of the rubber filling upper die 2 and the vulcanizing upper die 5. The boss 6 has a substantially cylindrical appearance and has a hemispherically bulging tip. Thus, a recess having a substantially U-shaped section is formed at a center of a lower surface of a stopper 7.

The rubber filling upper die 2 includes a first upper die 8 and a second upper die 9, and the second upper die 9 is placed on an upper side of the first upper die 8. As shown in Figure 4, a rod-shaped guide member 10 protrudes from a lower surface of the second upper die 9, and an engaging hole into which the guide member 10 engages is formed in an upper surface of the first upper die. Thus, the first upper die 8 and the second upper die 9 can be vertically separable. Figures 2 to 4 show a partition member 25 described later being removed from the first upper die 8.

A recessed pot 11 into which the unvulcanized rubber is placed is formed in the upper surface of the first upper die 8, and an inlet 12 through which the unvulcanized rubber is injected is formed in a bottom surface of the pot 11. A protruding plunger 13 is formed at a position corresponding to the pot 11 in the first upper die 8, in the lower surface of the second upper die 9.

The second upper die 9 is mounted to the upper heating platen 14a of the transfer molding machine, and can be vertically moved with up-and-down movement of the heating platen 14a. When the heating platen 14a is moved up, the second upper die 9 is moved up with the heating platen 14a as shown in Figure 4. The second upper die 9 is moved up to be separated from the first upper die 8. In that state, the unvulcanized rubber is placed into the pot 11. After the unvulcanized rubber is placed into the pot 11, the heating platen 14a is moved down to insert the plunger 13 into the pot 11, and the unvulcanized rubber in the pot 11 is injected through the inlet 12 into the die.

The middle die 3 can be also vertically divided into a first middle die 15 and a second middle die 16 according to a shape of the stopper 7. Specifically, the stopper 7 as a rubber molded product has a thick bowl shape and has a maximum diameter at a middle of a height. Thus, the middle die 3 can be divided into an upper side and a lower side of a section with the maximum diameter so that the stopper 7 can be demolded from the die 1 after molding.

As shown in Figure 3, the second middle die 16 can be laterally divided into two parts so as to facilitate mold opening after vulcanization molding and further allow the stopper with mounting plates 17 and 21 being integrally molded to be removed from the die. Similarly, the first middle die 15 can be also laterally divided into two parts. A circular recess is formed at a center of an upper surface of the lower die 4, and the disk-shaped mounting plate 17 integrally bonded to a top of the stopper after vulcanization molding is set in the recess.

In the first middle die 15 and the lower die 4 described above, a plurality of pins are formed in one of contact surfaces thereof, and a plurality of engaging holes that engage the pins are formed in the other. Thus, the first middle die 15 and the lower die 4 engage each other at a predetermined position. Similarly, pins are formed in one of the first middle die 15 and the second middle die 16, and engaging holes are formed in the other, and the first middle die 15 and the second middle die 16 engage each other at a predetermined position and can be assembled as the die 1.

For the vulcanizing upper die 5 and the second middle die 16, an annular recess 5a is formed in a lower surface of the vulcanizing upper die 5, an annular protrusion 16a is formed in an upper surface of the second middle die 16, and thus the vulcanizing upper die 5 and the second middle die 16 can engage each other. An annular recess 8b is formed in a lower surface of the first upper die 8 similarly to the vulcanizing upper die 5. Thus, the first upper die 8 and the second middle die 16 engage each other relatively rotatably around the centerline CL.

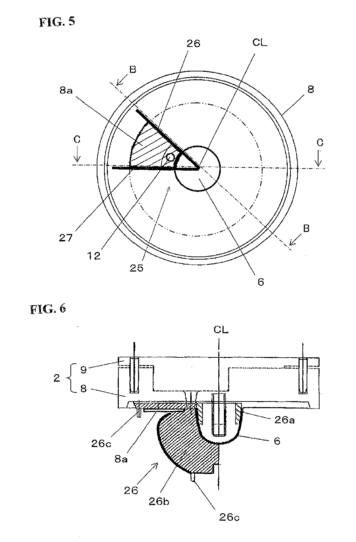

Figure 5 is a bottom view of the first upper die 8 to which the partition member 25 is mounted. As described above, the boss 6 protrudes from the center of the bottom surface of the first upper die 8, and the inlet 12 through which the unvulcanized rubber is injected into the die is formed near the boss 6. A sector region (a shaded region in Figure 5), including the inlet 12, of one eighth of an entire circumference around the centerline CL of the die is formed to protrude one step from the other regions as a nozzle section 8a.

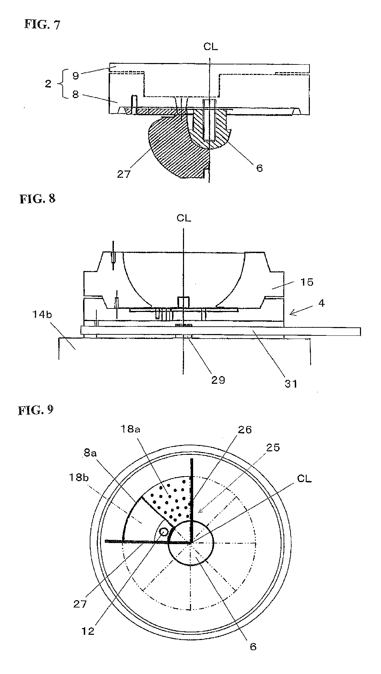

The partition member 25 is made of a metal material, and includes a movable partition plate 26 rotatably mounted to the boss 6, and a stationary partition plate 27 fixedly mounted to the boss. Figure 6 is a B-B sectional view of Figure 5, showing the movable partition plate 26. Figure 7 is a C-C sectional view of Figure 5, showing the stationary partition plate 27.

As shown in Figure 6, the movable partition plate 26 includes an annular section 26a, a plate-shaped main body section 26b secured to the annular section 26a, and a pin 26c protruding from the main body section 26b. An annular groove section 6a is formed in an outer periphery of the boss 6 on a base end side (a side closer to the first upper die 8) of the boss 6, and the annular section 26a of the movable partition plate 26 fits in the annular groove section 6a with play. Thus, the movable partition plate 26 is rotatable with respect to the boss 6.

Meanwhile, the stationary partition plate 27 has such a shape that the main body section 26b of the movable partition plate 26 is directly integrally joined to a tip of the boss 6. The main body section 26b of the movable partition plate 26 and the stationary partition plate 27 both partition the space in the die 1 in a radial direction from the centerline CL.

As shown by a broken line in Figure 1, the space in the die 1 is radially divided into eight regions 18a to 18h from the center of the die 1. The number of the regions is not particularly limited, but may be determined according to the shape and size of the rubber molded product. Four to ten regions are preferable.

As shown in Figure 2, a recess 28 around the centerline CL is formed at the center of the lower surface of the die 1, that is, the lower surface of the lower die 4, and a protrusion 29 that can fit in the recess 28 is formed in the lower heating platen 14b. The die 1 is rotatable around the centerline CL by the recess 28 fitting the protrusion 29 in the heating platen 14b.

Also, as shown in Figure 8, a chain 31 runs around an outer periphery of the lower die 4 of the die 1, and the other end of the chain 31 runs around a drive motor (not shown). The drive motor can be driven to rotate the die 1. As such, in this embodiment, a rotation apparatus that rotates the die 1 is provided.

A method for manufacturing the stopper 7 using the die 1 having the configuration described above will be described in detail. First, the rubber filling upper die 2 is used as an upper die, and as shown in Figure 5, the movable partition plate 26 and the stationary partition plate 27 are set radially around the centerline CL (so that the movable partition plate 26 and the stationary partition plate 27 form an angle of 45° therebetween) so as to hold the nozzle section 8a of the rubber filling upper die 2 therebetween. In this state, the rubber filling upper die 2 is assembled to the second middle die 16.

At this time, the first upper die 8 is assembled to the second middle die 16 so that the nozzle section 8a overlaps the region 18a on plan view of the second middle die 16. Thus, the region 18a is partitioned from the other regions, and further the inlet 12 communicates with the region 18a. The pin 26c of the movable partition plate 26 engages an engaging hole 32 formed in the die (see Figure 2). Thus, the movable partition plate 26 is rotatable with respect to the boss 6 (first upper die 8), and fixed in position with respect to the middle die 3 and the lower die 4.

The second upper die 9 is mounted to the upper heating platen 14a, and the heating platen 14a is moved up to open the upper die 2. In that state, a predetermined amount of unvulcanized rubber is placed into the pot 11, and the heating platen 14a is moved down. Thus, the plunger 13 is pressed into the pot 11, and the unvulcanized rubber is injected through the inlet 12 into the die 1. Air in the die 1 is discharged from an air vent.

The unvulcanized rubber is injected to fill the unvulcanized rubber into the region 18a in the die, then pressure is released to reduce push pressure of the nozzle section 8a, and then the rotation apparatus described above rotates by 45° the lower die 4 and the middle die 3. At this time, the movable partition plate 26 is also rotated counterclockwise by 45° together with the lower die 4 and the middle die 3 in Figure 1.

Meanwhile, in the rubber filling upper die 2, the second upper die 9 is secured to the upper heating platen 14a, and the guide member 10 regulates lateral movement of the first upper die 8 relative to the second upper die 9. Thus, when the lower die 4 and the middle die 3 are rotated, the rubber filling upper die 2 and the stationary partition plate 27 are not rotated.

Thus, as shown in Figure 9, the movable partition plate 26 and the stationary partition plate 27 are rotationally displaced relatively around the centerline CL, and form an angle of 90° therebetween. Figure 9 shows the first upper die 8 from a bottom surface, and shows a state rotated clockwise by 45° from the state in Figure 5. In Figure 9, the region filled with the unvulcanized rubber is shown with dots.

At this time, only a surface of the stationary partition plate 27 is previously subjected to mold release treatment, and a surface of the movable partition plate 26 is not subjected to the mold release treatment (the inner wall of the die 1 is not also subjected to the mold release treatment). Thus, when the movable partition plate 26 and the stationary partition plate 27 are relatively rotationally displaced around the centerline CL, the unvulcanized rubber filled into the region 18a is rotated by 45° together with the lower die 4, the middle die 3, and the movable partition plate 26.

By the above operation, as shown in Figure 9, a new space (region 18b) is created between the unvulcanized rubber and the stationary partition plate 27, and the nozzle section 8a overlaps the region 18b. Specifically, the inlet 12 communicates with the region 18b, and the region 18b is partitioned from the other regions by the stationary partition plate 27 and the unvulcanized rubber.

In this state, the rubber filling upper die 2 is opened, a predetermined amount of unvulcanized rubber is placed into the pot 11, and the heating platen 14a is moved down. Thus, the plunger 13 is pressed into the pot 11, and the unvulcanized rubber is injected through the inlet 12 into the die 1. As such, the region 18b is filled with the unvulcanized rubber subsequently to the region 18a.

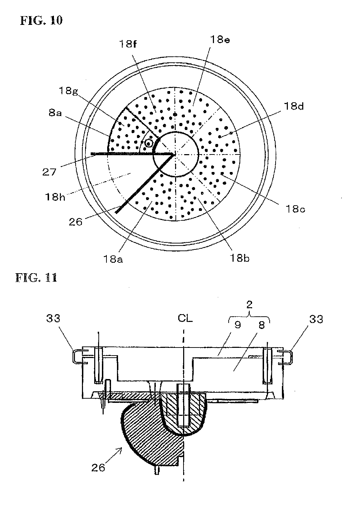

Then, as shown in Figure 10, the same operation is repeated until only a last region among the regions 18a to 18h is empty. In Figure 10, the regions filled with the unvulcanized rubber are shown with dots. At the time when only the region 18h is empty, as shown in Figure 11, a coupling member 33 having a substantially U-shaped section is inserted between the first upper die 8 and the second upper die 9 to couple the first upper die 8 and the second upper die 9 with the rubber filling upper die 2 being closed. Then, the heating platen 14a is moved up to remove the rubber filling upper die 2 from the middle die 3. At this time, the movable partition plate 26 and the stationary partition plate 27 are also removed from the die 1 together with the boss 6.

The boss 6 is removable from the first upper die 8, and the boss 6 to which the movable partition plate 26 and the stationary partition plate 27 are mounted is removed from the first upper die 8. Instead, a boss having a substantially cylindrical appearance and having a hemispherically bulging tip, to which the movable partition plate 26 and the stationary partition plate 27 are not mounted is mounted to the first upper die 8. In that state, the rubber filling upper die 2 is reassembled to the middle die 3. At this time, the nozzle section 8a overlaps the region 18h.

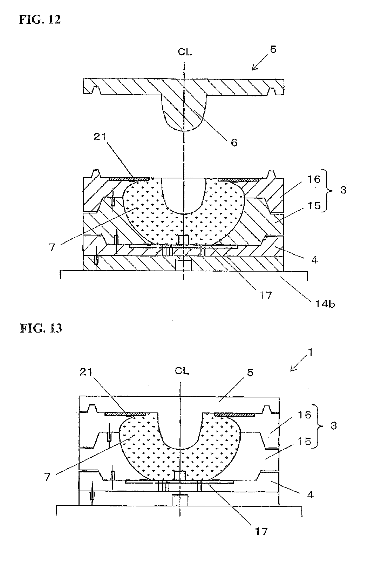

Then, the coupling member 33 is removed from the rubber filling upper die 2, the rubber filling upper die 2 is opened, a predetermined amount of unvulcanized rubber is placed into the pot 11, and the region 18h is filled with the unvulcanized rubber. After all the regions are filled with the unvulcanized rubber, the rubber filling upper die 2 is removed (the second upper die 9 is also removed from the heating platen 14a). Then, as shown in Figure 12, an annular mounting plate 21 is fitted around the recess formed in the upper surface of the middle die (second middle die 16), and as shown in Figure 13, the vulcanizing upper die 5 is reassembled to the middle die 3.

Then, the heating platen 14a is again moved down, the die 1 is pressed by the heating platens 14a and 14b, and the unvulcanized rubber in the die 1 is heated and vulcanized. At this time, the boss of the vulcanizing upper die 5 is formed to be slightly larger than the boss 6 of the rubber filling upper die 2. Thus, when the heating platens 14a and 14b pressurize the die, the unvulcanized rubber in the die can be effectively pressurized, thereby obtaining an integral stopper 7 having high sealability.

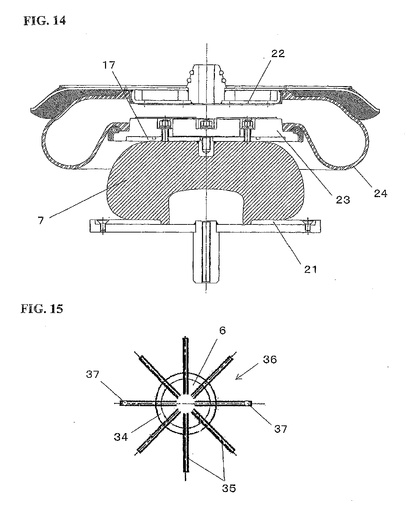

As shown in Figure 14, the stopper 7 thus obtained is used as a component of an air spring. The air spring includes, for example, an upper surface plate 22 mounted to a vehicle body, a lower surface plate 23 placed on a wheel side below the upper surface plate 22, a rubber diaphragm 24 placed across the upper surface plate 22 and the lower surface plate 23, and the stopper 7 interposed between the lower surface plate 23 and a support frame on the wheel side. The annular mounting plate 21 of the stopper 7 is mounted to the support frame (not shown) on the wheel side, and the disk-shaped mounting plate 17 of the stopper 7 is mounted to the lower surface plate 23.

As a molding condition in this embodiment, for example, a temperature of the die when the unvulcanized rubber is injected into each region can be 120°C to 140°C, preferably 125°C to 135°C. Further, as a vulcanization molding condition after filling of the unvulcanized rubber into all the regions, a vulcanization temperature can be 135°C to 140°C, and a vulcanization time can be 3 to 3.5 hours.

specifically, in this embodiment, the unvulcanized rubber is injected into the die using the transfer molding machine, and thus high pressure of about 5 to 15 MPa can be applied to the unvulcanized rubber. Thus, the unvulcanized rubber can be injected into the die 1 at a lower temperature than the vulcanization temperature. Thus, even if it takes a considerable time to fill the unvulcanized rubber into all the regions in the die 1, burns do not occur in the vulcanization rubber. Also, there is no need for special equipment, thereby reducing manufacturing costs.

In this embodiment, the aspect using the partition member 25 including the movable partition plate 26 and the stationary partition plate 27 has been described, but not limited to this. For example, as shown in Figure 15, a partition member 36 can be used including an annular section 34 that fits, with play, in an annular groove section formed in the outer periphery of the bcss 6, and a plurality of partition plate sections 35 radially formed around the annular section.

The partition plate sections 35 each partition the space in the die 1 in a radial direction from the centerline CL. A surface of each partition plate section 35 is subjected to mold release treatment. Further, a pin 37 that can engage the middle die 3 and/or the lower die 4 is formed in the partition plate section 35. In this aspect, eight partition plate sections 35 are provided.

When the partition member 36 having the configuration described above is used, the rubber filling upper die 2 is assembled to the die 3 so that the nozzle section 8a overlaps a region partitioned by adjacent partition plate sections 35 and 35. Then, as described above, the unvulcanized rubber is injected through the inlet 12. After one region is filled with the unvulcanized rubber, pressure is released to reduce push pressure of the nozzle section 8a, and then the rotation apparatus described above rotates by 45° the lower die 4 and the middle die 3.

Thus, the partition member 36 is rotated by 45° together with the lower die 4 and the middle die 3, and the nozzle section 8a overlaps a region adjacent to the region filled with the unvulcanized rubber. As such, the unvulcanized rubber is filled into each region, and at the time when only a last region is empty, the rubber filling upper die 2 is removed from the middle die 3. At this time, the partition member 36 is also removed from the die 1 together with the boss 6.

Then, the boss 6 to which the partition member 36 is mounted is removed from the first upper die 8, and instead, a boss 6 having a substantially cylindrical appearance and having a hemispherically bulging tip, to which the partition member 36 is not mounted is mounted to the first upper die 8. Then, as described above, after filling of the unvulcanized rubber into the last region, the vulcanizing upper die 5 may be mounted instead of the rubber filling upper die 2 to perform heating and vulcanization.

### Industrial Applicability

The present invention can be suitably used for manufacturing a large rubber molded product such as a stopper for an air spring of a vehicle or the like.

### Reference Signs List

- 1: die
- 2: rubber filling upper die
- 3: middle die
- 4: lower die
- 5: vulcanizing upper die
- 6: boss
- 7: stopper
- 8: first upper die
- 8a: nozzle section
- 9: second upper die
- 10: guide member
- 11: pot
- 12: inlet
- 13: plunger
- 14a, 14b: heating platen
- 15: first middle die
- 16: second middle die
- 17: disk-shaped mounting plate
- 18a to 18h: region
- 21: annular mounting plate
- 22: upper surface plate
- 23: lower surface plate
- 24: diaphragm
- 25, 36: partition member
- 26: movable partition plate
- 27: stationary partition plate
- 34: annular section
- 35: partition plate section

## Claims

1. A method for manufacturing a rubber molded product in which unvulcanized rubber filled into a die is demolded after being heated and vulcanized, comprising the steps of:
dividing a space in the die into a plurality of regions;
filling the unvulcanized rubber into one of the plurality of regions partitioned from the other regions by a partition member;
repeating the process until a last region among the plurality of regions is left;
then removing the partition member from the die and then filling the unvulcanized rubber into the last region, thereby filling the unvulcanized rubber into all the regions.

2. The method for manufacturing a rubber molded product according to claim 1, wherein after the unvulcanized rubber is filled into one of the plurality of regions, the partition member is moved, the unvulcanized rubber is filled into a region created between the partition member and the unvulcanized rubber filled into the one region, and the process is repeated until a last region among the plurality of regions is left.

3. The method for manufacturing a rubber molded product according to claim 2, wherein the die has an inner wall shape rotationally symmetric around the rotating shaft, the partition member includes two partition plates that partition the space in the die in a radial direction from the rotating shaft, the two partition plates are placed radially around the rotating shaft in the die, the unvulcanized rubber is filled into the region partitioned by the partition plates, then one of the partition plates and the filled unvulcanized rubber are relatively rotationally displaced around the rotating shaft, the unvulcanized rubber is filled into a region created between one of the partition plates and the filled unvulcanized rubber, and the process is repeated until a last region among the plurality of regions is left.

4. The method for manufacturing a rubber molded product according to claim 1, wherein the partition member is formed so that a plurality of partition plates are radially provided, and an edge of each partition plate comes into contact with an inner wall of the die, the partition member partitions the space in the die into a plurality of regions, the unvulcanized rubber is filled into the regions one by one, and the process is repeated until a last region among the plurality of regions is left.

5. The method for manufacturing a rubber molded product according to any one of claims 1 to 4, wherein the unvulcanized rubber is filled into the die by transfer molding.

6. The method for manufacturing a rubber molded product according to claim 5, wherein the rubber molded product is a roll stopper for an air spring.

7. A transfer molding die having an inner wall shape rotationally symmetric around a rotating shaft, comprising a partition member that partitions a space in the die,
wherein the partition member includes a plurality of partition plates that partition the space in the die in a radial direction from the rotating shaft, and the plurality of partition plates are radially placed around the rotating shaft in the die to partition the space in the die.
